# EUROPEAN PATENT APPLICATION

(11) **EP 3 800 218 A1**
(43) Date of publication of application: **07.04.2021**
(21) Application number: 20199886.1
(22) Date of filing: 02.10.2020
(51) Int. Cl.: C08J 9/32, C08F 22/10, C08F 122/10, C08F 222/10, C08K 7/22, C08L 35/00, B29C 64/00, C08F 2/44, C08F 2/50

(54) **TRANSPARENT RESIN COMPOSITION FOR MOLDING AND 3D MOLDED ARTICLE**

(30) Priority: 04.10.2019 JP 2019184034
(71) Applicant: Nabtesco Corporation, Tokyo 102-0093 (JP); Cmet Inc., Yokohama-shi, Kanagawa 222-0033 (JP)
(72) Inventor: TENO, Toshinari, Chiyoda-ku, Tokyo (JP); DAICHO, Yuuya, Yokohama-shi, Kanagawa (JP)
(74) Representative: Grünecker Patent- und Rechtsanwälte PartG mbB

(57) **Abstract**

Provided is a transparent resin composition for modeling that can make a highly transparent mold. The transparent resin composition for modeling relating to the present invention includes a resin composition and thermally expandable microcapsules. The resin composition contains a photopolymerizable compound and a polymerization initiator. The transparent resin composition for modeling relating to the present invention is characterized in that a difference in refractive index between the resin composition and the thermally expandable microcapsules is 0.1 or less.

## Description

### TECHNICAL FIELD

The present invention relates to a transparent resin composition for modeling and a three-dimensional object fabricated using the same.

### BACKGROUND

Three-dimensional objects may be optically fabricated using photocurable resin compositions based on data input into three-dimensional CAD systems. In recent years, such methods of fabricating three-dimensional objects have been widely employed since three-dimensional objects with target shapes and dimensions can be accurately fabricated.

A known method of fabricating a three-dimensional object includes making a mold using a photopolymerizable resin composition containing thermally expandable capsules and a resin composition, filling the mold with a curable resin and curing the resin, and subsequently heating the thermally expandable capsules to a foaming temperature or higher to cause the capsules to expand and eventually cause the mold to collapse, thereby removing a three-dimensional object made of the cured curable resin (see WO2013/15117 A1). Such a method of optically fabricating a three-dimensional object can provide even objects with a complicated shape in a readily manner within a relatively short period of time.

### SUMMARY

The present inventors have found a new problem of the three-dimensional object fabricating method disclosed in WO2013/15117 A1. There may be errors in identifying portions to be cured and insufficiently cured portions, but the operator cannot externally see such defects through the mold. Therefore, the operator can not know whether to interrupt the fabricating process and only acknowledge the defects in the finished three-dimensional object.

A mold (a three-dimensional object) is made using a resin composition containing thermally expandable microcapsules and a resin composition containing a photopolymerizable compound. The present inventors have found that the transparency of the mold can be noticeably improved by determining the refractive index of the resin composition containing the photopolymerizable compound and the refractive index of the thermally expandable microcapsules such that the difference therebetween is 0.1 or less. Due to the improved transparency, defects of a three-dimensional object to be fabricated within the mold can be discovered before the fabricating process is completed. Accordingly, the fabricating process can be interrupted. The summary of the present disclosure is as follows.
1. A transparent resin composition for modeling, comprising: a resin composition containing a photopolymerizable compound and a photopolymerization initiator; and thermally expandable microcapsules,
   characterized in that a difference in refractive index between the resin composition and the thermally expandable microcapsules is 0.1 or less.
2. The transparent resin composition for modeling according to claim 1, wherein the thermally expandable microcapsules have an average particle size of 1 to 100 µm.
3. The transparent resin composition for modeling according to claim 1 or 2, wherein the content of the thermally expandable microcapsules is 10 to 40% by mass.
4. The transparent resin composition for modeling according to any one of claims 1 to 3, wherein the resin composition has a refractive index of 1.46 to 1.56 at a wavelength of 589.3 nm.
5. A three-dimensional object characterized by being fabricated using the transparent resin composition for modeling according to any one of claims 1 to 4.
6. The three-dimensional object according to claim 5, wherein the fabricated three-dimensional object has haze of 30% or less.
7. A transparent resin composition for modeling, comprising:
   a resin composition containing a photopolymerizable compound and a photopolymerization initiator, the resin composition having a refractive index of 1.46 to 1.56 at a wavelength of 589.3 nm; and
   thermally expandable microcapsules having an average particle size of 1 to 100 µm, the thermally expandable microcapsules accounting for 10 to 40 mass parts relative to the resin composition,
   characterized in that a difference in refractive index between the resin composition and the thermally expandable microcapsules is 0.1 or less.

The transparent resin composition for modeling according to the present invention can be used to make a highly transparent mold. As a result, defects of a three-dimensional object to be fabricated within the mold can be found out before the fabricating process is completed. Accordingly, the fabricating process can be interrupted, thereby effectively reducing the cost of fabricating the three-dimensional object.

### DESCRIPTION OF THE PREFERRED EMBODIMENTS

In the present disclosure, the refractive index of the thermally expandable microcapsules, namely, the refractive index of the outer shell of the microcapsules can be measured in compliance with JIS B7071 at a wavelength of 589.3 nm.

To measure the refractive index of the resin composition in the transparent resin composition for modeling relating to the present invention, the thermally expandable microcapsules are removed from the transparent resin composition for modeling relating to the present invention, the result is shaped and irradiated with active light rays for curing. In this manner, a test piece having a length of 50 mm, a width of 30 mm and a thickness of 5 mm is obtained and subjected for refractive index measurement.

### <TRANSPARENT RESIN COMPOSITION FOR MODELING>

A transparent resin composition for modeling relating to the present invention is characterized by containing a photopolymerizable compound, thermally expandable microcapsules, and a photopolymerization initiator.

The transparent resin composition for modeling relating to the present invention is characterized in that a difference in refractive index between the thermally expandable microcapsules and the resin composition at least containing the photopolymerizable compound and photopolymerization initiator is 0.1 or less. Such characteristics can allow the transparent resin composition for modeling relating to the present invention to fabricate a mold (a three-dimensional object) having improved transparency. More preferably, the difference in refractive index between the thermally expandable micro-capsules and the resin composition is 0.075 or less, further more preferably, 0.05 or less.

The transparent resin composition for modeling relating to the present invention at least contains a photopolymerizable compound and a photopolymerization initiator. The resin composition preferably exhibits a refractive index of 1.46 to 1.56, more preferably, a refractive index of 1.48 to 1.53 at a wavelength of 589.3 nm. When the refractive index of the resin composition falls within the above numerical range, a mold (a three-dimensional object) to be fabricated using the transparent resin composition for modeling relating to the present invention can achieve improved transparency.

### <PHOTOPOLYMERIZABLE COMPOUND>

The photopolymerizable compound can be a cationic polymerizable organic compound or a radical polymerizable resin composition. The resin composition may contain both a cationic polymerizable organic compound and a radical polymerizable organic compound.

The cationic polymerizable organic compound can be, for example, an epoxy compound, an oxetane compound, a cyclic ether compound, a cyclic acetal compound, a cyclic lactone compound, a spiro ortho ester compound, a vinyl ether compound and the like. Any one of these cationic polymerizable organic compounds may be used alone, or two or more may be used together. Among these cationic polymerizable organic compounds, an epoxy compound and an oxetane compound are preferably used.

When the transparent resin composition for modeling contains a cationic polymerizable organic compound, its content is preferably 30 to 95% by mass, more preferably 40 to 80% by mass. When the content of the cationic polymerizable organic compound falls within the above numerical range, a mold (a three-dimensional object) to be fabricated using the transparent resin composition for modeling relating to the present invention can achieve improved toughness, resistance against impact, durability, resistance against high temperature, dimensional stability and mechanical characteristics. When the transparent resin composition for modeling contains both an epoxy compound and an oxetane compound, their respective contents are preferably 50 to 90% by mass and 3 to 50% by mass, more preferably 55 to 95% by mass and 5 to 45% by mass. When the respective contents of the epoxy compound and oxetane compound fall within the above numerical ranges, a mold (a three-dimensional object) to be fabricated using the transparent resin composition for modeling relating to the present invention can achieve improved mechanical characteristics.

The epoxy compound can be an alicyclic epoxy compound, an aliphatic epoxy compound, an aromatic epoxy compound and the like. The alicyclic epoxy compound can be polyglycidyl ether of a polyhydric alcohol containing an alicyclic ring, or a cyclohexene oxide structure containing compound and a cyclopentene oxide structure containing compound obtained by epoxydizing a cyclohexene ring containing compound or a cyclopentene ring containing compound using an oxidant such as hydrogen peroxide or peroxy acid.

Specific examples include an alicyclic diglycidyl ether compound represented by the following general formula.

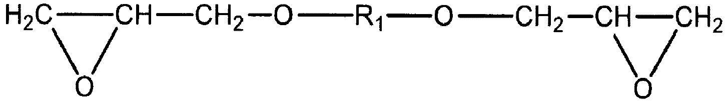

In the formula, R₁ denotes a hydrogenated bisphenol A residue, a hydrogenated bisphenol F residue, a hydrogenated bisphenol Z residue, a hydrogenated bisphenol AD residue, a cyclohexanedimethanol residue, or a tricyclodecanedimethanol residue. More specifically, hydrogenated bisphenol A diglycidyl ether, hydrogenated bisphenol F diglycidyl ether, hydrogenated bisphenol AD diglycidyl ether, hydrogenated bisphenol Z diglycidyl ether, cyclohexanedimethanol diglycidyl ether and tricyclodecanedimethanol diglycidyl ether can be used. Any one of these may be used alone, or two or more may be used together.

The cyclohexene oxide structure containing compound or cyclopentene oxide structure containing compound can be, for example, 3, 4-epoxycyclohexylmethyl-3',4'-epoxycyclohexanecarboxylate, 3, 4-epoxy-1-methylcyclohexyl-3,4-epoxy-1-methylcyclohexanecarboxylate, 6-methyl-3,4-epoxycyclohexylmethyl-6-methyl-3,4-epoxycyclohexanecarboxylate, 3,4-epoxy-3-methylcyclohexylmethyl-3,4-epoxy-3-methylcyclohexanecarboxylate, 3, 4-epoxy-5-methylcyclohexylmethyl-3, 4-epoxy-5-methylcyclohexanecarboxylate, 2-(3,4-epoxycyclohexyl-5,5-spiro-3, 4-epoxy)cyclohexane-methadioxane, bis(3,4-epoxycyclohexylmethyl)adipate, 3, 4-epoxy-6-athylcyclohexylcarboxylate, dicyclopentadienediepoxide, ethylenebis(3,4-epoxycyclohexanecarboxylate), epoxy hexahydrophthalate dioctyl, epoxy hexahydrophthalate di-2-ethylhexyl and the like. Any one of these may be used alone, or two or more may be used together.

The above-listed cyclohexene oxide structure containing compounds or cyclopenteneoxide structure containing compounds may be commercially available products, for example, ε-caprolactone modified 3',4'-epoxycyclohexylmethyl-3,4-epoxycyclohexanecarboxylate and 1,2-epoxy-4-(2-oxiranyl) cyclohexane adduct of 2,2-bis(hydroxymethyl)-1-butanol, which are available from Daicel Chemical Industries, Ltd. As further examples, bis(3,4-epoxycyclohexyl)methane, 2, 2-bis(3,4-epoxycyclohexyl)propane, 1,1-bis(3,4-epoxycyclohexyl)ethane, alpha-pinene oxide, campholenic aldehyde, limonene monooxide, limonene dioxide, 4-vinylcyclohexenemonooxide, 4-vinylcyclohexenedioxide and the like can be used. Any one of these may be used alone, or two or more may be used together.

Other than the above-mentioned aliphatic epoxy compound, for example, polyglycidyl ether of an aliphatic polyhydric alcohol or its alkylene oxide adduct, polyglycidyl ester of an aliphatic long-chain polybasic acid, a homopolymer produced by vinyl polymerization of glycidylacrylate or glycidylmethacrylate, a copolymer produced by vinyl polymerization of glycidylacrylate and/or glycidylmethacrylate and another vinyl monomer, and the like may be used.

The above-mentioned aliphatic epoxy compound can be, for example, putyl glycidyl ether, 2-ethylhexyl glycidyl ether, glycidyl ether of a higher alcohol, diglycidyl ether of alkylene diol (for example, diglycidyl ether of 1,4-butanediol, diglycidyl ether of 1,6-hexanediol, diglycidyl ether of neopentyl glycol and the like), glycidyl ether of a polyhydric alcohol such as triglycidyl ether of glycerin, diglycidyl ether of trimethylolpropane, triglycidyl ether of trimethylolpropane, tetraglycidyl ether of sorbitol, hexaglycidyl ether of dipentaerythritol, diglycidyl ether of polyethyleneglycol, diglycidyl ether of polypropylene glycol and diglycidyl ether of polytetramethylene glycol. Any one of these may be used alone, or two or more may be used together.

Furthermore, diglycidyl ester of aliphatic long-chain dibasic acid or polyglycidyl ether of polyether polyol, which can be obtained by adding one, two or more kinds of alkylene oxides to an aliphatic polyhydric alcohol such as propylene, trimethylol propane and glycerin, may be used.

Furthermore, monoglycidyl ether of an aliphatic higher alcohol, phenol, cresol, butylphenol may be used, or monoglycidyl ether of a polyether alcohol, which can be obtained by adding alkylene oxide to phenol, cresol and butylphenol, glycidyl ester of a higher fatty acid, epoxidized soybean oil, epoxy stearic acid butyl, epoxidized polybutadiene, glycidylized polybutadiene and the like may be used. As an epoxyalkane, 1, 2- epoxydecane, 1,2-epoxydodecane, 1,2-epoxytetradecane, 1,2-epoxycetane, 1, 2-epoxyoctadecane, 1,2-epoxyicosane and the like may be used. Any one of these may be used alone, or two or more may be used together.

Other aliphatic epoxy compounds can include, for example, polyglycidyl ether of an aliphatic polyhydric alcohol or its alkylene oxide adduct, polyglycidyl ester of an aliphatic long-chain polybasic acid, a homopolymer produced by vinyl polymerization of glycidyl acrylate or glycidyl methacrylate, a copolymer produced by vinyl polymerization of glycidyl acrylate and/or glycidyl methacrylate and another vinyl monomer, and the like. The representative compounds can include, for example, putyl glycidyl ether, 2-ethylhexyl glycidyl ether, glycidyl ether of a higher alcohol, glycidyl ether of a polyhydric alcohol such as diglycidyl ether of 1,4-butanediol, diglycidyl ether of 1,6-hexanediol, diglycidyl ether of neopentyl glycol, triglycidyl ether of glycerin, diglycidyl ether of trimethylolpropane, triglycidyl ether of trimethylolpropane, tetraglycidyl ether of sorbitol, hexaglycidyl ether of dipentaerythritol, diglycidyl ether of polyethyleneglycol, diglycidyl ether of polypropylene glycol and diglycidyl ether of polytetramethylene glycol. Any one of these may be used alone, or two or more may be used together.

As the oxetane compound, one, two or more of monooxetane compounds having one oxetane group in one molecule and polyoxetane compounds having two or more oxetane groups in one molecule can be used.

As the monooxetane compounds having one oxetane group in one molecule, monooxetane monoalcohol compounds having in one molecule one oxetane group and one alcoholic hydroxyl group are particularly preferably used. Among the monooxetane monoalcohol compounds, at least one of the monooxetane monoalcohol compounds represented by the following general formulas (I) and (II) is preferably used due to excellent availability, high reactivity and low viscosity.

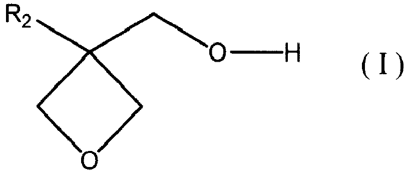

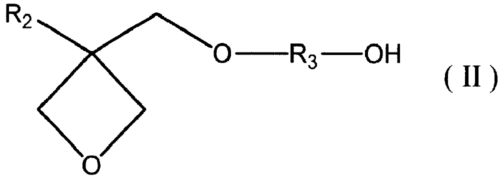

In the formulas, R₂ denotes a 1-5C alkyl group, and R₃ denotes a 2-10C alkylene group that may have an ether linkage.

The examples of R₂ in the formulas (I) and (II) can include methyl, ethyl, propyl, butyl and pentyl.

The specific examples of the monooxetane monoalcohol compound represented by the above general formula (I) can include 3-hydroxymethyl-3-methyloxetane, 3-hydroxymethyl-3-ethyloxetane, 3-hydroxymethyl-3-propyloxetane, 3-hydroxymethyl-3-normalbutyloxetane, 3-hydroxymethyl-3-propyloxetane and the like. Any one of these may be used alone, or two or more may be used together. Among these, 3-hydroxymethyl-3-methyloxetane and 3-hydroxymethyl-3-ethyloxetane are preferably used due to their excellent availability and reactivity.

The examples of R₃ in the above formula (II) can include an ethylene group, a trimethylene group, a tetramethylene group, a pentamethylene group, a hexamethylene group, a heptamethylene group, a 3-oxypentylene group. Among these, a trimethylene group, a tetramethylene group, a pentamethylene group or a heptamethylene group are preferably selected due to the ease of production and handling since their compounds are liquid at room temperature.

As the polyoxetane compounds having two or more oxetane groups in one molecule, compounds having two oxetane groups, compounds having three or more oxetane groups, compounds having four or more oxetane groups can be all used but dioxetane compounds having two oxetane groups are preferably used. Among these, the dioxetane compounds represented by the following general formula (III) are preferably used from the perspective of the availability, reactivity, low hygroscopicity, and mechanical characteristics exhibited when it is cured. 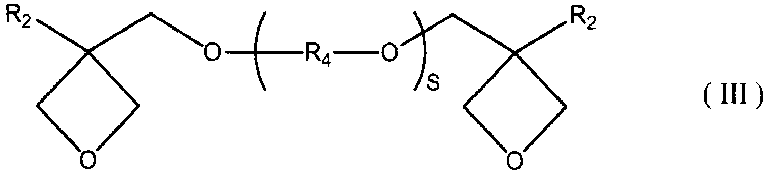 In the formula, two R₂ represent the same or different 1-5C alkyl groups, R₄ represents a dihydric organic group with or without an aromatic ring, and s represents 0 or 1.

The examples of R₂ in the formula (III) can include methyl, ethyl, propyl, butyl and pentyl. The examples of R₄ can include a 1-12C straight-chain or branched alkylene group (for example, an ethylene group, a propylene group, a putylene group, a neopentylene group, an n-pentamethylene group, an n-hexamethylene group and the like), a dihydric group represented by a formula: - CH₂-Ph-CH₂- or -CH₂-Ph-Ph-CH₂-, a hydrogenated bisphenol A residue, a hydrogenated bisphenol F residue, a hydrogenated bisphenol Z residue, a cyclohexanedimethanol residue, a tricyclodecanedimethanol residue, a terephthalate residue, an inphthalate residue, an o-phthalate residue and the like.

The specific examples of the above-mentioned polyoxetane compounds having two or more oxetane groups in one molecule can include bis(3-methyl-3-oxetanylmethyl)ether, bis(3-ethyl-3-oxetanylmethyl)ether, bis(3-propyl-3-oxetanylmethyl)ether, bis(3-butyl-3-oxetanylmethyl)ether and the like. Among these, bis(3-methyl-3-oxetanylmethyl)ether and/or bis(3-ethyl-3-oxetanylmethyl)ether are preferably used from the perspective of excellent availability, low hygroscopicity and mechanical characteristics exhibited when they are cured, and bis(3-ethyl-3-oxetanylmethyl)ether is particularly preferably used.

### <RADICAL POLYMERIZABLE ORGANIC COMPOUND>

The radical polymerizable organic compounds can include, for example, (meth)acrylic-based compounds having a (meth)acrylate group, unsaturated polyester compounds, allyl urethane-based compounds, polythiol compounds and the like. Among these, the (meth)acrylic-based compounds are preferably used.

When the transparent resin composition for modeling contains a radical polymerizable organic compound, its content is preferably 10 to 90% by mass, more preferably 50 to 80% by mass. When the content of the radical polymerizable organic compound falls within the above numerical range, a mold (a three-dimensional object) to be fabricated using the transparent resin composition for modeling relating to the present invention can achieve improved toughness, resistance against impact, durability, resistance against high temperature, dimensional stability and mechanical characteristics.

The (meth)acrylic-based compounds include products of a reaction between epoxy compounds and (meth)acrylic acids, (meth)acrylic acid ester of alcohols, urethane(meth)acrylate, polyester(meth)acrylate, polyether(meth)acrylate and the like.

The products of a reaction between epoxy compounds and (meth)acrylic acids can include (meth)acrylate reaction products obtained by a reaction between aromatic epoxy compounds, alicyclic epoxy compounds and/or aliphatic epoxy compounds and (meth)acrylic acids, and the specific examples can include: (meth)acrylates obtained by a reaction between (meth)acrylic acids and glycidyl ether obtained by a reaction between epoxidizing agents such as epichlorohydrin and bisphenol compounds such as bisphenol A and bisphenol S, bisphenol compounds such as bisphenol A and bisphenol S in which a benzene ring is substituted with an alkoxy group or the like, alkyleneoxide adducts of the above-listed bisphenol compounds or substituted bisphenol compounds; and (meth)acrylate reaction products obtained by a reaction between epoxy novolac resins and (meth)acrylic acids. Any one of these may be used alone, or two or more may be used together.

The (meth)acrylic acid ester of alcohols can include (meth)acrylates obtained by a reaction between (meth)acrylic acids and aromatic, aliphatic and alicyclic alcohols having at least one hydroxyl group in a molecule and/or their alkyleneoxide adducts. The specific examples can include di(meth)acrylates of bisphenol compounds such as bisphenol A and bisphenol S or bisphenol compounds such as bisphenol A and bisphenol S in which a benzene ring is substituted with an alkoxy group and the like, 2-ethylhexyl(meth)acrylate, 2-hydroxyethyl(meth)acrylate, 2-hydroxypropyl(meth)acrylate, lauryl(meth)acrylate, stearyl(meth)acrylate, inoctyl(meth)acrylate, tetrahydrofurfuryl(meth)acrylate, impornyl(meth)acrylate, pendyl(meth)acrylate, 1,4-butanedioldi(meth)acrylate, 1,6-hexanedioldi(meth)acrylate, diethyleneglycoldi(meth)acrylate, triethyleneglycoldi(meth)acrylate, neopentylglycoldi(meth)acrylate, polyalkyleneglycoldi(meth)acrylate (for example, polyethyleneglycoldi(meth)acrylate, polypropyleneglycoldi(meth)acrylate, polytetramethyleneglycoldi(meth)acrylate and the like), poly(meth)acrylates of polyhydric alcohols having three or more hydroxyl groups such as trimethylolpropanetri(meth)acrylate, ditrimethylolpropanetetra(meth)acrylate, pentaerythritoltetra(meth)acrylate and dipentaerythritolhexa(meth)acrylate, (meth)acrylates of alkyleneoxide adducts of polyhydric alcohols such as the above-listed diol, triol, tetraol and hexaol, and the like. Any one of these may be used alone, or two or more may be used together.

The urethane(meth)acrylates can include, for example, (meth)acrylates obtained by a reaction between (meth)acrylic acid ester containing a hydroxyl group and incyanate compounds. As the (meth)acrylic acid ester containing a hydroxyl group, (meth)acrylic acid ester containing a hydroxyl group obtained by an esterifying reaction between an aliphatic dihydric alcohol and a (meth)acrylic acid is preferably used, and the specific example can be 2-hydroxyethyl(meth)acrylate and the like. As the incyanate compounds, poly incyanate compounds having two or more incyanate groups in one molecule, such as tolylene diincyanate, hexamethylenediincyanate, inphorone diincyanate are preferably used.

The polyester(meth)acrylates can include polyester(meth)acrylates obtained by a reaction between (meth)acrylic acids and polyester containing a hydroxyl group.

The polyether(meth)acrylates can include polyetheracrylates obtained by a reaction between acrylic acids and polyether containing a hydroxyl group. The resin composition for optically fabricating a three-dimensional object relating to the present invention contains, as the photopolymerizable compound, dimethacrylate of substituted bisphenol compounds such as ethoxylated bisphenol A dimethacrylate and contains, as the photopolymerization initiator (photoradical polymerization initiator), benzil (a.k.a diphenylethanedione) or its dialkylacetal-based compound (for example, benzildimethylketal and the like) and, when employed in optically fabricating an object, can provide a core that has excellent strength and heat resistance while it can sufficiently foam (or sufficiently expand) and easily collapse when heated to a temperature equal to or higher than an expansion starting temperature at which the thermally expandable microcapsules can start expanding.

The resin composition for optically fabricating a three-dimensional object, which can be used to fabricate a core, can contain a polyalkylene ether-based compound, if desired. If the resin composition for optically fabricating a three-dimensional object contains a polyalkylene ether-based compound, the obtained three-dimensional object can have improved properties, for example, resistance against impact and also successfully foam when heated to a temperature equal to or higher than the expansion starting temperature at which the thermally expandable microcapsules can start expanding. If the resin composition contains a large amount of polyalkylene ether-based compound, however, the result of curing may be likely to be cloudy.

### <PHOTOPOLYMERIZATION INITIATOR>

The resin composition relating to the present invention contains a photopolymerization initiator, which can be, for example, cationic polymerization initiators and radical polymerization initiators. As the cationic polymerization initiators, onium salts can be preferably used that release Lewis acids when irradiated with active energy rays. Such onium salts can include, for example, aromatic sulfonium salts of Group-Vila elements, aromatic onium salts of Group-VIa elements and aromatic onium salts of Group-Va elements.

The representative examples of the cationic polymerization initiators can include results of linking together sulfonium ions represented by a general formula: [(R₁₁)(R₁₂)(R₁₃)S⁺] (where R₁₁, R₁₂ and R₁₃ each represent a monohydric organic group independently linked with sulfur (S)) or iodonium ions represented by a general formula: [(R₁₄)(R₁₅)I⁺] (where R₁₄ and R₁₅ each represent a monohydric organic group independently linked with iodine (I)) and anions (phosphate ions) represented by a general formula: [(Rf)ₘPF₆₋ₘ⁻] (where Rf represents a fluoroalkyl group and m represents an integer of 0 to 6), anions (antimonate ions) represented by a general formula: [(R_{f})ₙSbF₆₋ₙ⁻] (where R_{f} represents a fluoroalkyl group and n represents an integer of 0 to 6), anions represented by a formula: [BF⁴⁻], anions represented by a formula: [AsF⁶⁻] and the like.

The specific examples of the phosphorus-based sulfonium compounds can include triphenylsulfonium-tris (perfluoroethyl)trifluorophosphate and commercially available compounds ("CPI-500K," "CPI-500P," "CPI-200K" available from San-Apro Ltd., 4-(2-chloro-4-benzoilphenylthio)phenylbis(4-fluorophenyl)sulfoniumhexafluorophosphate, "SP-152" available from ADEKA Corporation).

The antimony-based sulfonium compounds can include, for example, bis-[4-(diphenylsulfonio)phenyl]sulfidebisdihexafluoroantimonate, bis-[4-(di-4'-hydroxyethoxyphenylsulphonio)phenyl]sulphidebisdihexafluoroantimonate, 4-(phenylthio)phenyldiphenylsulfoniumhexafluoroantimonate ("CPI-101A" or "CPI-110S" available from San-Apro Ltd.) and 4-(2-chloro-4-benzoylphenylthio)phenylbis(4-fluorophenyl)sulfoniumhexafluoroantimonate ("SP-172"available from ADEKA Corporation).

Any one of the above-listed cationic polymerization initiators may be used alone, or two or more may be used together. Among these, aromatic sulfonium salts are more preferably used in the present invention.

In the present invention, if required, a photosensitizer such as benzophenone, alkoxyanthracene, dialkoxyanthracene and thioxanthone may be used together with the cationic polymerization initiators in order to enhance the reaction rate.

The cationic polymerization initiators preferably account for 0.1 to 10% by mass relative to the total amount of the photopolymerizable compound, more preferably 1 to 8% by mass, particularly preferably 1 to 5% by mass.

The radical polymerization initiators can include, for example, benzil or its dialkyl acetal-based compounds, phenylketone-based compounds, acetophenone-based compounds, benzoin or its alkylether-based compounds and benzophenone-based compounds and thioxanthone-based compounds. The benzil or its dialkyl acetal-based compounds can include, for example, benzil dimethyl ketal, benzil-β-methoxyethyl acetal.

The phenylketone-based compounds can include, for example, 1-hydroxy-cyclohexyl phenyl ketone.

The acetophenone-based compounds can include, for example, diethoxyacetophenone, 2-hydroxymethyl-1-phenylpropane-1-on, 4'-isopropyl-2-hydroxy-2-methyl-propiophenone, 2-hydroxy-2-methyl-propiophenone, p-dimethylaminoacetophenone, p-tert-butyl dichloro acetophenone, p-tert-butyl trichloro acetophenone and p-azide benzalacetophenone.

The benzoin-based compounds can include, for example, benzoin, benzoinmethylether, benzoinethylether, benzoinisopropylether, benzoinnormalbutylether, and benzoinisobutylether.

The benzophenone-based compounds can include, for example, benzophenone, methyl o-benzoylbenzoate, Michler's ketone, 4,4'-bisdiethylaminobenzophenone and 4,4'-dichlorobenzophenone. The thioxanthone-based compounds can include, for example, thioxanthone, 2-methylthioxanthone, 2-ethylthioxanthone, 2-chlorothioxanthone and 2-isopropylthioxanthone.

In the present invention, one, two or more of the above-listed radical polymerization initiators can be mixed and then used to satisfy desired properties. Among the above, benzil dimethyl ketal is preferably used since high reaction rate is achieved and curing is instantaneously completed.

The radical polymerization initiators preferably account for 0.1 to 10% by mass relative to the total amount of the photoradical polymerizable compound, more preferably 1 to 8% by mass, particularly preferably 1 to 5% by mass.

### <OTHER FEATURES>

The resin composition may contain an additive to such an extent that the characteristics of the present invention are not compromised. The additive can include, for example, a defoaming agent, a leveling agent, a thickener, a flame retardant, an antioxidant and a filler.

### <THERMALLY EXPANDABLE MICROCAPSULES>

The thermally expandable microcapsules are obtained by enclosing a volatile substance in outer shells. When the thermally expandable microcapsules are heated, the outer shells become softened and, at the same time, the vapor pressure of the volatile substance enclosed rises and the volume of the volatile substance increases.

The outer shells of the thermally expandable microcapsules can be made of, for example, polyolefine such as ethylene, (meth)acrylic resins, styrene resins, vinyl acetate, vinyl resins such as vinyl chloride and vinylidene chloride, polyamide and polyester.

Among these, (meth)acrylic resins or (meth)acrylonitrile resins or their copolymers are preferably used from the perspective of transparency, which is required for the mold (three-dimensional object) to be fabricated using the transparent resin composition for modeling relating to the present invention.

There are no particular limitations on the volatile substance to be enclosed and can include, for example, propane, butene, isobutane, isopentene, neopentene, hexane, heptane, methyl chloride and tetramethylsilane.

The thermally expandable microcapsules preferably have an average particle size of 1 to 100 µm, more preferably 10 to 50 µm.

When the average particle size of the thermally expandable microcapsules falls within the above numerical range, a mold (a three-dimensional object) to be fabricated using the transparent resin composition for modeling relating to the present invention can be shaped more readily without compromising the transparency.

The average particle size of the micro-capsules is measured using laser diffraction scattering. The content of the thermally expandable microcapsules in the transparent resin composition for modeling is preferably within the range of 10 to 40% by mass, more preferably 20 to 35% by mass. When the content of the thermally expandable microcapsules in the transparent resin composition for modeling falls within the above numerical range, a mold (a three-dimensional object) to be fabricated using the transparent resin composition for modeling relating to the present invention can collapse more readily when heated without compromising the transparency. There are no particular limitations on the foaming temperature of the thermally expandable microcapsules, which can be within the range of 100 to 200°C, for example.

### <MOLD (THREE-DIMENSIONAL OBJECT)>

The mold relating to the present invention is formed by a three-dimensional object fabricated using the above-described transparent resin composition for modeling. The haze of the three-dimensional object is preferably 30% or less, more preferably 20% or less, most preferably 15% or less. To measure the haze, the above-described transparent resin composition for modeling is used to fabricate a test piece having a length of 50 mm, a width of 30 mm and a thickness of 5 mm. The haze of this test piece is measured using a haze meter in compliance with ISO14782.

The three-dimensional object can be fabricated using conventionally known methods, for example, the following method. To start with, the transparent resin composition for modeling according to the present invention is provided and subsequently irradiated with active energy rays selectively to be cured in a pattern. In this way, a cured film is made. After this, on the cured transparent resin composition for modeling, an uncured transparent resin composition for modeling is provided and irradiated with active energy rays selectively to make a cured film. These series of steps are repeatedly performed to make cured films sequentially. In this way, the mold (three-dimensional object) can be fabricated.

As used herein, the phrase "active energy rays" means energy rays causing photocurable resin compositions to cure, such as ultraviolet rays, electron beams, X rays, radiation or radio-frequency radiation.

Among the above-listed active energy rays, ultraviolet rays having wavelengths of 300 to 400 nm are preferably used from the perspective of the cost. In this case, the light source is, for example, an ultraviolet laser (for example, a diode pumped solid-state laser, an Ar laser, an He-Cd laser and the like), a high-pressure mercury lamp, an extra high-pressure mercury lamp, a low-pressure mercury lamp, a xenon lamp, a halogen lamp, a metal halide lamp, an ultraviolet LED (light emitting diode), an ultraviolet fluorescent lamp and the like.

There are no particular limitations on the irradiation with the active energy rays in terms of the pitch, coverage, depth in the photocurable resin composition, spot diameter, wavelength, rate, duration and timing. It is preferable to make appropriate changes in these parameters in accordance with the makeup of the photocurable resin composition to be used.

Any active energy rays can be used as long as they are movable in the X and Y directions (the planar direction) or in the X, Y and Z directions (the planar direction and depth and/or height direction). There are no particular limitations on the manner of how the active energy rays are moved. For example, the active energy rays can be moved by adjusting the angle of the reflective mirror constituting the optical scanner, moving the position of the reflective mirror, and/or adjusting the height at which the reflective mirror is positioned.

The following describes one embodiment of a method of fabricating a three-dimensional object by filling a mold, which is made using the transparent resin composition for modeling relating to the present invention, with a curable resin.

To start with, the transparent resin composition for modeling according to the present invention is provided and subsequently irradiated with active energy rays selectively to be cured in a pattern. In this way, a cured film is made.

A thermosetting resin is poured into the space enclosed within the cured film and heated at a temperature less than the foaming temperature of the thermally expandable microcapsules contained in the transparent resin composition for modeling, thereby forming a cured layer.

Subsequently, on the cured transparent resin composition for modeling, uncured transparent resin composition for modeling is supplied and selectively irradiated with active energy rays to form a second cured film. A thermosetting resin is poured into the space within the second cured film and heated at a temperature less than the foaming temperature of the thermally expandable microcapsules contained in the transparent resin composition for modeling, thereby forming a second cured layer.

These series of steps are repeatedly performed, so that cured films (mold) and cured layers are sequentially formed.

After this, the sequentially formed cured films are heated at a temperature equal to or higher than the foaming temperature of the thermally expandable microcapsules so that they collapse. In this way, a three-dimensional object made up by the sequentially formed cured layers can be obtained.

### EXAMPLES

### <Example 1>

A photosensitive resin composition was made by mixing together 100 pts.mass of ethoxylated bisphenol A dimethacrylate ("BPE-200" available from Shin-Nakamura Chemical Co, Ltd., EO 4 mol), 2.5 pts.mass of benzildimethylketal ("Irgacure 651" available from BASF), and 35 pts.weight of thermally expandable micro-capsule (having an outer shell made of acrylonitrile resin).

### <Example 2>

A photosensitive resin composition was made by mixing together 85 pts.mass of ethoxylated bisphenol A dimethacrylate ("BPE-200" available from Shin-Nakamura Chemical Co, Ltd., EO 4 mol), 15 pts.mass of ethoxylated bisphenol A dimethacrylate ("BPE-500" available from Shin-Nakamura Chemical Co, Ltd., EO 10 mol), 2.5 pts.mass of benzildimethylketal ("Irgacure 651" available from BASF), and 35 pts.weight of KUREHA Microspheres (having an outer shell made of acrylonitrile resin).

### <Measurement of Refractive Index>

The microcapsules were removed from the transparent resin compositions for modeling relating to the above examples, and the resulting resin compositions were used to make test pieces having a length of 50 mm, a width of 30 mm and a thickness of 5 mm. The refractive indices of the test pieces were measured in compliance with JIS B7071. In addition, the refractive index of the outer shell portion of the microcapsules was independently measured in the above manner. The results of the measurement are shown in Table 1.

| Table 1 | Refractive Index of Resin Composition | Refractive Index of Microcapsule (Outer Shell) | Difference in Refractive Index |
|---|---|---|---|
| Example 1 | 1.54 | 1.53 | 0.01 |
| Example 2 | 1.54 | 1.53 | 0.01 |

### <Measurement of Haze>

The resin compositions obtained in the above examples were used to make test pieces having a length of 50 mm, a width of 30 mm and a thickness of 5 mm. The haze of these test pieces was measured using a haze meter in compliance with ISO14782. The results of the measurement are shown in Table 2.

### <Evaluation of Transparency>

The test pieces obtained for the haze measurement were visually examined and evaluated based on the following criteria. The results of the evaluation are shown in Table 2.

### <Criteria of Evaluation>

A. High transparency of the test piece was recognizable.
B. The test piece was cloudy and transparency was not recognizable.

### <Evaluation of Foams>

The test pieces obtained for the haze measurement were placed in a thermostatic tank of 200°C and heated for 10 minutes. After this, the resulting test pieces were visually examined as to how successfully the foams were produced and evaluated based on the following criteria. The results of the evaluation are shown in Table 2.

### <Criteria of Evaluation>

A. The thermally expandable microcapsules contained in the test piece successfully and recognizably expanded.
B. The thermally expandable microcapsules contained in the test piece only insufficiently expanded.

| Table 2 | Haze | Transparency | Foams |
|---|---|---|---|
| Example 1 | 12% | A | A |
| Example 2 | 14% | A | A |

## Claims

1. A transparent resin composition for modeling, comprising:
a resin composition containing a photopolymerizable compound and a photopolymerization initiator; and thermally expandable microcapsules,
**characterized in that** a difference in refractive index between the resin composition and the thermally expandable microcapsules is 0.1 or less.

2. The transparent resin composition for modeling according to claim 1, wherein the thermally expandable microcapsules have an average particle size of 1 to 100 µm.

3. The transparent resin composition for modeling according to claim 1 or 2, wherein the content of the thermally expandable microcapsules is 10 to 40% by mass.

4. The transparent resin composition for modeling according to one of claims 1 to 3, wherein the resin composition has a refractive index of 1.46 to 1.56 at a wavelength of 589.3 nm.

5. A three-dimensional object **characterized by** being fabricated using the transparent resin composition for modeling according to one of claims 1 to 4.

6. The three-dimensional object according to claim 5, wherein the fabricated three-dimensional object has haze of 30% or less.

7. A transparent resin composition for modeling, comprising:
a resin composition containing a photopolymerizable compound and a photopolymerization initiator, the resin composition having a refractive index of 1.46 to 1.56 at a wavelength of 589.3 nm; and
thermally expandable microcapsules having an average particle size of 1 to 100 µm, the thermally expandable microcapsules accounting for 10 to 40 mass parts relative to the resin composition,
**characterized in that** a difference in refractive index between the resin composition and the thermally expandable microcapsules is 0.1 or less.
